# EUROPEAN PATENT SPECIFICATION

(11) **EP 1 016 183 B1**
(45) Date of publication and mention of the grant of the patent: **15.09.2004**
(21) Application number: 98902366.8
(22) Date of filing: 02.02.1998
(51) Int. Cl.: H02K 1/16, H02K 3/40

(54) **A ROTATING ELECTRIC MACHINE**
DREHENDE ELEKTRISCHE MASCHINE
MACHINE ELECTRIQUE TOURNANTE

(30) Priority: 03.02.1997 SE 9700359; 28.11.1997 SE 9704429
(43) Date of publication of application: 05.07.2000
(73) Proprietor: ABB AB, 721 83 Västeras (SE)
(72) Inventor: BERGGREN, Sören, S-724 62 Väster s (SE); LEIJON, Mats, S-723 35 Väster s (SE)
(74) Representative: Karlsson, Leif Karl Gunnar
(86) International application number: PCT/SE1998/000169
(87) International publication number: WO 1998/034321

(56) References cited:
- EP-A- 0 314 860
- FR-A- 2 594 271
- US-A- 4 510 077
- US-A- 4 827 172
- US-A- 5 036 165
- US-A- 5 066 881
- DERWENT'S ABSTRACT, No. 83-709953/28, Week 8328; & SU,A,955 369 (GIDROPROEKT RES INST) 30 August 1982.

## Description

The present invention relates to a rotating electric machine of the type described in the preamble to claim 1, such as synchronous machines and normal asynchronous machines as well as dual-fed machines, applications in asynchronous static current converter cascades, outer pole machines and synchronous flow machines.

In the present application the terms "radial", "axial" and "peripheral" constitute indications of direction defined in relation to the stator of the machine unless expressly stated otherwise. The term "cable lead-through" refers in the application to each individual length of the cable extending through a slot.

The machine is intended primarily as generator in a power station for generating electric power. The machine is intended for use at high voltages. High voltages shall be understood here to mean electric voltages in excess of 10 kV. A typical operating range for the machine according to the invention may be 36 to 800 kV.

Similar machines have conventionally been designed for voltages in the range 6-30 kV, and 30 kV has normally been considered to be an upper limit. This generally means that a generator must be connected to the power network via a transformer which steps up the voltage to the level of the power network, i.e. in the range of approximately 100-400 kV.

Although the predominant technology when supplying current to a high-voltage network for transmission, subtransmission and distribution, is to insert a transformer between the generator and the power network as mentioned in the introduction, it is already known to endeavour to eliminate the transformer by generating the voltage directly at the level of the network. Such a generator is described in US-4,429,244, US-4,164,672 and US-3,743,867.

A conductor is known through US-5,036,165, in which the insulation is provided with an inner and an outer layer of semiconducting pyrolized glass fiber . It is also known to provide conductors in a dynamo-electric machine with such an insulation, as described in US 5,066,881 for instance, where a semiconducting pyrolized glassfiber layer is in contact with the two parallel rods forming the conductor, and the insulation in the stator slots is surrounded by an outer layer of semiconducting pyrolized glassfiber. The pyrolized glassfiber material is described as suitable since it retains its resistivity even after the impregnation treatment.

Another example of high - power generator is provided by SU 95 53 69.

By using high-voltage insulated electric conductors, in the following termed cables, with solid insulation similar to that used in cables for transmitting electric power in the stator winding (e.g. XLPE cables) the voltage of the machine can be increased to such levels that it can be connected directly to the power network without an intermediate transformer.

The concept generally requires the slots in which the cables are placed in the stator to be deeper than with conventional technology (thicker insulation due to higher voltage and more turns in the winding). This entails new problems with regard to cooling, vibrations and natural frequencies in the region of the coil end, teeth and winding.

Securing the cable in the slot is also a problem - the cable must be inserted into the slot without its outer layer being damaged. The cable is subjected to currents having a frequency of 100 Hz which cause a tendency to vibration and, besides manufacturing tolerances with regard to the outer diameter, its dimensions will also vary with variations in temperature (i.e. load variations).

The present invention relates to the above-mentioned problems associated with avoiding damage to the exterior of the cable during insertion into the stator slots and avoiding wear against the surface caused by vibration during operation.

A particular risk is that the cable may be damaged by the slot wall at the transition between its narrow and wide parts. Sharp edges are formed in the slot wall if the slot is formed by two opposite flat slot walls with circular enlargements for the cable lead-throughs, these enlargements constituting the wide parts. These sharp edges may damage the cable not only during winding, but also during operation. It is important for the cable to be supported at least pointwise along the slot during operation, by means of pressure members pressing the cable against one or both of the slot walls. The purpose of this is to dampen vibration in the cable. There is thus a risk of the cable being pressed against one of these sharp edges, and the outer semiconducting layer may therefore become worn and damaged, partly because the vibrations cannot be completely suppressed and partly because of thermally caused movement in the cable.

In conventional (i.e. working below the high voltage range) rotating electrical 1 machines having slots for the windings where the slots have alternating wide and narrow parts it is earlier known e.g. through FR-2594271 that the slots do not have any sharp edges, which is a consequence of the relatively small size of the slots in such a machine. In these slots there is no welldefined transition part between the wide and narrow parts, where the presence of edges could occur. Thus a machine of that type does not face the problem to which the present invention is directed, namely to avoid damage to the cable from sharp edges in a machine capable of working the high voltage range.

The object of the present invention is to eliminate or at least reduce the risk of damage occurring in this way in a rotating electric machine capable of working in the high voltage range.

According to the invention this is achieved with a rotating electric machine of the type described in the preamble to claim 1 having the special features defined in the characterizing part of this claim.

The specific problems described are avoided by shaping the profile of the slot walls so that no corners occur where the cable can come into contact with the walls. And by the specific features of the windings the machine is applicable in the high voltage range.

In the arrangement according to the invention the windings thus are of a type corresponding to cables with solid, extruded insulation, such as those used nowadays for power distribution, e.g. XLPE-cables or cables with EPR-insulation. Such a cable comprises an inner conductor composed of one or more strand parts, an inner semiconducting layer surrounding the conductor, a solid insulating layer surrounding this and an outer semiconducting layer surrounding the insulating layer. Such cables are flexible, which is an important property in this context since the technology for the device according to the invention is based primarily on winding systems in which the winding is formed from cable which is bent during assembly. The flexibility of a XLPE-cable normally corresponds to a radius of curvature of approximately 20 cm for a cable 30 mm in diameter, and a radius of curvature of approximately 65 cm for a cable 80 mm in diameter. In the present application the term "flexible" is used to indicate that the winding is flexible down to a radius of curvature in the order of four times the cable diameter, preferably eight to twelve times the cable diameter.

The winding should be constructed to retain its properties even when it is bent and when it is subjected to thermal stress during operation. It is vital that the layers retain their adhesion to each other in this context. The material properties of the layers are decisive here, particularly their elasticity and relative coefficients of thermal expansion. In a XLPE-cable, for instance, the insulating layer consists of cross-linked, low-density polyethylene, and the semiconducting layers consist of polyethylene with soot and metal particles mixed in. Changes in volume as a result of temperature fluctuations are completely absorbed as changes in radius in the cable and, thanks to the comparatively slight difference between the coefficients of thermal expansion in the layers in relation to the elasticity of these materials, radial expansion can take place without the adhesion between the layers being lost.

The material combinations stated above should be considered only as examples. Other combinations fulfilling the conditions specified and also the condition of being semiconducting, i.e. having resistivity within the range of 10⁻¹-10⁶ ohm-cm, e.g. 1-500 ohm-cm, or 10-200 ohm-cm, naturally also fall within the scope of the invention.

The insulating layer may consist, for example, of a solid thermoplastic material such as low-density polyethylene (LOPE), high-density polyethylene (HOPE), polypropylene (PP), polybutylene (PB), polymethyl pentene (PMP), cross-linked materials such as cross-linked polyethylene (XLPE), or rubber such as ethylene propylene rubber (EPR) or silicon rubber.

The inner and outer semiconducting layers may be of the same basic material but with particles of conducting material such as soot or metal powder mixed in.

The mechanical properties of these materials, particularly their coefficients of thermal expansion, are affected relatively little by whether soot or metal powder is mixed in or not - at least in the proportions required to achieve the conductivity necessary according to the invention. The insulating layer and the semiconducting layers thus have substantially the same coefficients of thermal expansion.

Ethylene-vinyl-acetate copolymers/nitrile rubber, butyl graft polyethylene, ethylene-butyl-acrylate-copolymers and ethylene-ethyl-acrylate copolymers may also constitute suitable polymers for the semiconducting layers.

Even when different types of material are used as base in the various layers, it is desirable for their coefficients of thermal expansion to be substantially the same. This is the case with combination of the materials listed above.

The materials listed above have relatively good elasticity, with an E-modulus of E<500 MPa, preferably <200 MPa.

The elasticity is sufficient for any minor differences between the coefficients of thermal expansion for the materials in the layers to be absorbed in the radial direction of the elasticity so that no cracks appear, or any other damage, and so that the layers are not released from each other. The material in the layers is elastic, and the adhesion between the layers is at least of the same magnitude as the weakest of the materials.

The conductivity of the two semiconducting layers is sufficient to substantially equalize the potential along each layer. The conductivity of the outer semi-conducting layer is sufficiently great to enclose the electrical field in the cable, but sufficiently small not to give rise to significant losses due to currents induced in the longitudinal direction of the layer.

Thus preferably, each of the two semiconducting layers essentially constitutes one equipotential surface and the winding, with these layers, will substantially enclose the electrical field within it.

There is, of course, nothing to prevent one or more additional semiconducting layers being arranged in the insulating layer.

The invention refers particularly to such a cable having a diameter within the interval 20-200 mm and a conducting area within the interval 80-3000 mm².

These and other preferred embodiments of the rotating electric machine according to the invention are defined in the sub-claims to claim 1.

The invention will now be explained in more detail in the following description of preferred embodiments thereof with reference to the accompanying drawings.
- Figure 1: shows a schematic end view of a sector of the stator in a machine of the type to which the invention relates,
- Figure 2: shows a cross section through a cable used in the machine according to the invention,
- Figure 3: shows part of a radial section through a slot, illustrating a first embodiment of the invention,
- Figure 4: shows an enlarged detail of a radial section through a slot illustrating a second embodiment of the invention,
- Figure 5: shows a radial section through a slot illustrating a third embodiment of the invention, and
- Figure 6: shows a radial section through a slot illustrating a fourth embodiment of the invention.

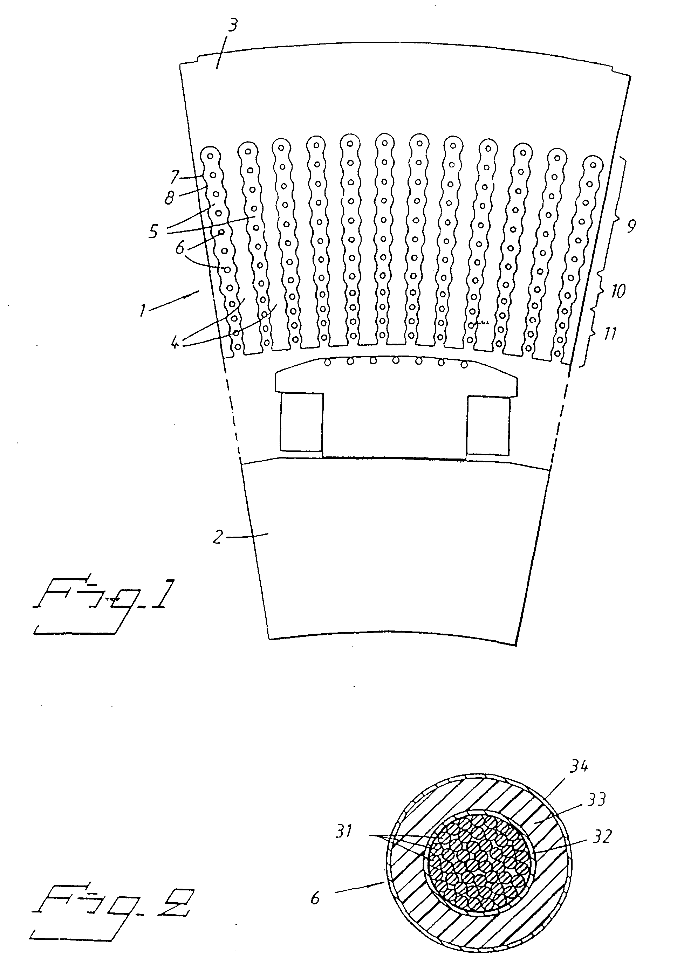

In the schematic axial view shown in Figure 1 through a sector of the stator 1 of the machine, its rotor is designated 2. The stator is conventionally composed of a laminated core of core sheet. The figure shows a sector of the machine corresponding to one pole division. From a yoke part 3 of the core, situated radially outermost, a number of teeth 4 extend radially inwards towards the rotor 2, the teeth being separated by slots 5 in which the stator winding is arranged. The cables 6 in the windings are high-voltage cables and may be of substantially the same type of high-voltage cables as those used for power distribution, e.g. XLPE cables. One difference is that the outer, mechanically protective sheath and metal screen that normally surround such a cable are omitted. The cable thus consists only of a conductor, an inner semiconducting layer, an insulating layer and an outer semiconducting layer. The semiconducting layer sensitive to mechanical damage on the outside of the cable is thus exposed.

In the figure the cables 6 are indicated schematically, only the central, conducting part of the cable part or coil side being drawn in. As can be seen, each slot 5 has varying cross section with alternating narrow parts 8 and wide parts 7. The wide parts 7 are substantially circular and surround the cable lead-throughs, the waist parts between these thus forming narrow parts 8. The waist parts serve to radially position each cable lead-through. The cross section of the slot as a whole also becomes narrower radially inwards. This is because the stress in the cable lead-throughs is lower the closer they are situated to the radially innermost part of the stator. Slim cable lead-throughs can therefore be used here, whereas thicker ones are necessary further out. Cables of three different dimensions are used in the example illustrated, arranged in three sections 9, 10, 11 of the slot 5 dimensioned to fit them.

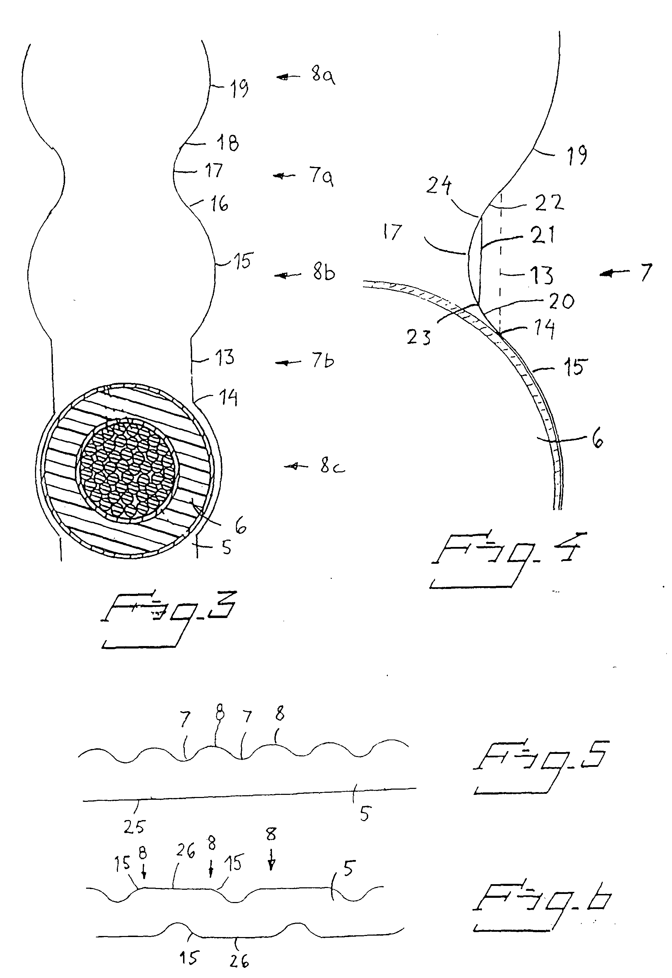

Figure 2 shows a cross section through a high-voltage cable 6 used according to the present invention. The high-voltage cable 6 a number of strand parts 31 made of copper (Cu), for instance, and having circular cross section. These strand parts 31 are arranged in the middle of the cable 6. Around the strand parts 31 is a first semiconducting layer 32. Around the first semi-conducting layer 32 is an insulating layer 33, e.g. XLPE-insulation, and around the insulating layer 33 is a second semi-conducting layer 34. The concept of "high-voltage cable" in the present application need not therefore include the metal screen and the outer sheath that normally surround such a cable for power distribution.

Each slot 5 in Figure 1 can in principle be described as being formed of a slot with flat radial walls provided with circular enlargements for passage of the cable. With this basic form, the transition between each of the wide parts 7 and the intermediate narrow parts 8 thus produces a sharp edge.

This is illustrated in Figure 3 which is an enlarged radial section through a slot 5 of similar type to that shown in Figure 1, but somewhat modified in order to explain the inventive concept.

In the lower part of the figure, where a cable lead-through 6 is drawn in, the corner formed by the wall profile where the circular section surrounding the cable meets the straight section 13 of the narrow part 8b of the slot, is designated 14. Such a corner can seriously damage the outer semiconducting layer 34 when the cable is subjected to vibration during operation and when the cable is held pressed against the slot wall by radial and/or tangential forces from clamping devices (not shown) used to keep the cable in place.

The upper part of the figure, between the wide parts 7a and 7b, illustrates how the narrow part 8b is designed according to a preferred embodiment of the invention. The profile of the slot wall here is in the form of an arc 17 in the narrow part 8a between the adjacent arc-shaped parts 15 and 19. The arc 17 forms tangents with the arcs 15 and 19 outside the points 16 and 18. The transition between the narrow part 8a and the adjacent wide parts 7a, 7b is thus gentle and has no corner which, like the corner 14, can damage the outer semi-conducting layer of the cable lead-through in the parts 7a and 7b.

As mentioned, Figure 3 aims only to explain the invention and it should be understood that a slot in accordance with the invention lacks any corners equivalent to the corner 14 since all the narrow parts are shaped like the part 8a in the figure.

Although the entire section 17 of the narrow part of the slot wall is here in the form of an arc, it should be understood that this is not necessary. The important thing is that the transition between sections 15 and 19 and the intermediate section lack corners, which can be achieved by rounding the profile only in the region of the transition. Such an embodiment is illustrated in Figure 4.

The figure illustrates three different wall profiles in the narrow part 8. 13 denotes the profile 13 in accordance with Figure 3, i.e. where there is a risk of the cable 6 being damaged by the corner 14. 17 denotes the profile in which the whole narrow part is in the form of an arc 17 as shown at 8a in Figure 3. 20, 21, 22 denote a profile according to another embodiment of the invention. Here, a short arc-shaped section 20, 22 joins the arcs 15 and 19 of the wide parts, the two arc-shaped parts being connected by a straight line 21. Corners 23, 24 are formed here, but the arc-shaped sections 20, 22 are sufficiently long to ensure that both these corners are so far from the cable 6 that there is no risk of the cable coming into contact with either of the corners. The important thing is, thus, to avoid corners in the immediate vicinity of the cable. The arc-shaped sections 20, 22 may also be replaced with other curve shapes, including straight lines, providing these join the wide arc-shaped sections 15 and 19 at a tangent. The section 21 between them may, of course, have optional shape.

The invention is applicable even when the wide parts 7 and narrow parts 8 of the slot 5 are asymmetrical. Figures 5 and 6 show two examples of such asymmetrical slots. Figure 5 shows one flat slot wall and one provided with indentations formed by the narrow parts. In Figure 6 each narrow part is formed by a flat wall section on one side and an indentation on the other side, the flat and indented sides being placed alternately on the walls of the slot.

## Claims

1. A rotating electric machine incorporating a stator with windings drawn through slots (5) in the stator, **characterized in that** the windings consist of high-voltage cable (6), which is flexible and composed of an electrically conducting core surrounded by an inner semiconducting layer, an insulating layer of solid material surrounding the inner semiconducting layer, and an outer semiconducting layer surrounding the insulating layer, said layers being adhered to each other, which layers consist of materials with such elasticity and such a relation between the coefficients of thermal expansion of the materials that the changes in volume in the layers caused by temperature fluctuations during operation are absorbed by the elasticity of the materials so that the layers retain their adhesion to each other at the temperature fluctuations occurring during operation, and **in that** the slots (5) have alternate narrow (8) and wide (7) parts in radial direction, formed by the two walls of the slot, the walls in a radial section having a profile which, at least in the area where the walls abut the cable (6), lacks protruding corners.

2. A rotating electric machine as claimed in claim 1, wherein said profile lacks corners.

3. A rotating electric machine as claimed in claim 1 or 2, wherein said profile, along at least one wall, is provided with concave, arc-shaped sections (15, 19) in the wide parts (7) and convexly curved sections (17; 20, 22) that connect the arc-shaped sections (15, 19) to the sections forming the narrow parts (8).

4. A rotating electric machine as claimed in claim 3, wherein the convexly curved sections (17; 20, 22) are arc-shaped.

5. A rotating electric machine as claimed in claim 3 or claim 4, wherein the narrow parts (8) forming the sections (17; 20, 22) are convexly curved.

6. A rotating electric machine as claimed in claim 5, wherein the narrow parts (8) forming the sections are arc-shaped (17).

7. A rotating electric machine as claimed in any of claims 1-6, wherein the slot (5) is symmetrical in relation to a radial plane through the middle of the slot.

8. A rotating electric machine as claimed in any of claims 1-6, wherein one slot wall (25) is substantially flat.

9. A rotating electric machine as claimed in any of claims 2-6, wherein the profile of each wall has flat sections (26) which alternately connect two wide parts (7) with each other and which form a tangent to the arc-shaped sections (15) of both said wide parts (7) .

10. A rotating electric machine as claimed in any of claims 1-9, in which the cable (6) is of a type comprising a core with a plurality of strand parts (31).

11. A rotating electric machine as claimed in any of claims 1-10, wherein the high-voltage cable (6) has a diameter within the interval 20-200 mm and a conducting area within the interval 80-3000 mm².

12. A rotating electric machine as claimed in claim 10 or claim 11, **characterized in that** the materials in said layers have high elasticity, preferably with an E-modulus less than 500 MPa, most preferably less than 200 MPa.

13. A rotating electric machine as claimed in any of claims 10-12, **characterized in that** the coefficients of thermal expansion for the materials in said layers are of substantially the same magnitude.

14. A rotating electric machine as claimed in any of claims 10-13 **characterized in that** the adhesion between the layers is of at least the same magnitude as in the weakest of the materials.

15. A rotating electric machine as claimed in any of claims 10-14, **characterized in that** each of the semiconducting layers essentially constitutes one equipotential surface.

## Patentansprüche

1. Rotierende elektrische Maschine, welche einen Stator mit durch Schlitze (5) in dem Stator gezogenen Wicklungen aufweist, **dadurch gekennzeichnet, dass** die Wicklungen aus einem Hochspannungskabel (6) bestehen, das biegsam ist und sich aus einem von einer inneren Halbleiterschicht umgebenen elektrisch leitenden Kern, einer Isolierschicht aus festem Werkstoff, welche die innere Halbleiterschicht umgibt, und einer die Isolierschicht umgebenden äußeren Halbleiterschicht zusammensetzt, wobei die Schichten aneinander haften, und die Schichten aus Werkstoffen mit einer derartigen Elastizität und einer derartigen Beziehung zwischen den Wärmeausdehnungskoeffizienten der Werkstoffe gebildet sind, dass die Volumenveränderungen in den Schichten, welche durch Temperaturschwankungen während des Betriebs verursacht werden, durch die Elastizität der Werkstoffe absorbiert werden, so dass die Schichten ihre Haftung aneinander bei den während des Betriebs auftretenden Temperaturschwankungen behalten, und dass die Schlitze (5) abwechselnd schmale (8) und breite (7) Teilstücke in radialer Richtung aufweisen, die durch die beiden Wände des Schlitzes gebildet werden, wobei die Wände im Radialschnitt ein Profil aufweisen, das zumindest in dem Bereich, wo die Wände an das Kabel (6) stoßen, keine vorstehenden Ecken aufweist.

2. Rotierende elektrische Maschine nach Anspruch 1, **dadurch gekennzeichnet, dass** das Profil keine Ecken aufweist.

3. Rotierende elektrische Maschine nach Anspruch 1 oder 2, **dadurch gekennzeichnet, dass** das Profil zumindest entlang einer Wand konkave, bogenförmige Abschnitte (15, 19) in den breiten Teilstücken (7) sowie konvex gekrümmte Abschnitte (17; 20, 22) aufweist, welche die bogenförmigen Abschnitte (15, 19) mit den die schmalen Teilstücke (8) bildenden Abschnitten verbinden.

4. Rotierende elektrische Maschine nach Anspruch 3, **dadurch gekennzeichnet, dass** die konvex gekrümmten Abschnitte (17; 20, 22) bogenförmig ausgebildet sind.

5. Rotierende elektrische Maschine nach Anspruch 3 oder 4, **dadurch gekennzeichnet, dass** die die Abschnitte (17; 20, 22) bildenden schmalen Teilstücke (8) konvex gekrümmt sind.

6. Rotierende elektrische Maschine nach Anspruch 5, **dadurch gekennzeichnet, dass** die die Abschnitte bildenden schmalen Teilstücke (8) bogenförmig ausgebildet sind (17).

7. Rotierende elektrische Maschine nach einem der Ansprüche 1 bis 6, **dadurch gekennzeichnet, dass** der Schlitz (5) in Relation zu einer Radialebene durch die Mitte des Schlitzes symmetrisch ist.

8. Rotierende elektrische Maschine nach einem der Ansprüche 1 bis 6, **dadurch gekennzeichnet, dass** eine Schlitzwand (25) im Wesentlichen flach ist.

9. Rotierende elektrische Maschine nach einem der Ansprüche 2 bis 6, **dadurch gekennzeichnet, dass** das Profil einer jeden Wand flache Abschnitte (26) aufweist, die abwechselnd zwei breite Teilstücke (7) miteinander verbinden, und welche eine Tangente zu den bogenförmigen Abschnitten (15) der beiden breiten Teilstücke (7) bilden.

10. Rotierende elektrische Maschine nach einem der Ansprüche 1 bis 9, in welcher das Kabel (6) von einer Art ist, welche einen Kern mit einer Vielzahl von Litzenabschnitten (31) aufweist.

11. Rotierende elektrische Maschine nach einem der Ansprüche 1 bis 10, **dadurch gekennzeichnet, dass** das Hochspannungskabel (6) einen Durchmesser zwischen 20 und 200 mm und eine Leiterfläche im Bereich von 80 bis 3000 mm² aufweist.

12. Rotierende elektrische Maschine nach Anspruch 10 oder 11, **dadurch gekennzeichnet, dass** die Werkstoffe in diesen Schichten eine hohe Elastizität aufweisen, vorzugsweise mit einem E-Modul von weniger als 500 MPa, insbesondere von weniger als 200 MPa.

13. Rotierende elektrische Maschine nach einem der Ansprüche 10 bis 12, **dadurch gekennzeichnet, dass** die Wärmeausdehnungskoeffizienten für die Werkstoffe in den Schichten im Wesentlichen die selbe Höhe aufweisen.

14. Rotierende elektrische Maschine nach einem der Ansprüche 10 bis 13, **dadurch gekennzeichnet, dass** die Haftung zwischen den Schichten mindestens gleich stark ist wie in dem schwächsten Werkstoff.

15. Rotierende elektrische Maschine nach einem der Ansprüche 10 bis 14, **dadurch gekennzeichnet, dass** alle Halbleiterschichten im Wesentlichen eine Äquipotentialfläche bilden.

## Revendications

1. , Machine électrique tournante comprenant un stator avec des enroulements prévus au sein d'encoches (5) dans le stator, **caractérisée en ce que** les enroulements se composent d'un câble à haute tension (6), qui est flexible et composé d'un noyau électriquement conducteur entouré par une couche semi-conductrice intérieure, une couche isolante de matériau solide entourant la couche semi-conductrice intérieure, et une couche semi-conductrice extérieure entourant la couche isolante, lesdites couches étant collées les unes aux autres, lesdites couches se composant de matériaux possédant une élasticité telle et une relation tette entre les coefficients de dilatation thermique des matériaux que les changements de volume au sein des couches provoqués par les fluctuations de température pendant le fonctionnement sont absorbés par l'élasticité des matériaux, si bien que les couches conservent leur adhérence les unes aux autres lors des fluctuations de température se produisant pendant le fonctionnement, et **en ce que** les encoches (5) possèdent des parties alternées étroites (8) et larges (7) dans la direction radiale, formées par les deux parois de l'encoche, les parois dans une section radiale possédant un profil qui, au moins dans la zone dans laquelle les parois aboutent contre le câble (6), ne possèdent pas d'angles proéminents.

2. Machine électrique tournante selon le revendication 1, dans laquelle ledit profil ne possède pas d'angles.

3. Machine électrique tournante selon la revendication 1 ou 2, dans laquelle ledit profil, le long d'au moins une paroi, est muni de sections concaves en forme d'arc (15, 19) dans les parties larges (7), et de sections courbées de manière convexe (17 ; 20, 22) qui reliant les sections en forme d'arc (15, 19) aux sections formant les parties étroites (8).

4. Machine électrique tournante selon la revendication 3, dans laquelle les sections courbées de manière convexe (17 ; 20, 22) sont en forme d'arc.

5. Machine électrique tournante selon la revendication 3 ou la revendication 4, dans laquelle les parties étroites (8) formant les sections (17 ; 20, 22) sont courbées de manière convexe.

6. Machine électrique tournante selon la revendication 5, dans laquelle les parties étroites (8) formant les sections sont en forme d'arc (17).

7. Machine électrique tournante selon l'une quelconque des revendications 1 à 6, dans laquelle l'encoche (5) est symétrique par rapport à un plan radial au milieu de l'encoche.

8. Machine électrique tournante selon l'une quelconque des revendications 1 à 6, dans laquelle une paroi d'encoche (25) est sensiblement plate.

9. Machine électrique tournante selon l'une quelconque des revendications 2 à 6, dans laquelle le profil de chaque paroi possède des sections plates (26) qui retient alternativement deux parties larges (7) l'une à l'autre et qui forment une tangente par rapport aux sections en forme d'arc (15) desdites deux parties larges (7).

10. Machine électrique tournante selon l'une quelconque des revendications 1 à 9, dans laquelle le câble (6) est d'un type comprenant un noyau avec une pluralité de parties de brins (31).

11. Machine électrique tournante selon l'une quelconque des revendications 1 à 10, dans laquelle le câble à haute tension (6) possède un diamètre dans l'intervalle de 20 à 200 mm et une zone conductrice dans l'intervalle de 80 à 3000 mm².

12. Machine électrique tournante selon la revendication 10 ou la revendication 11, **caractérisée en ce que** les matériaux dans lesdites couches possèdent une élasticité élevée, de préférence avec un module d'élasticité inférieur à 500 MPa, de préférence inférieur à 200 MPa.

13. Machine électrique tournante selon l'une quelconque des revendications 10 à 12, **caractérisée en ce que** les coefficients de dilatation thermique pour les matériaux dans lesdites couches sont sensiblement de le même ampleur.

14. Machine électrique tournante selon l'une quelconque des revendications 10 à 13, **caractérisée en ce que** l'adhérence entre les couches est d'au moins la même ampleur que dans le plus fragile des matériaux.

15. Machine électrique tournante selon l'une quelconque des revendications 10 à 14, **caractérisée en ce que** chacune des couches semiconductrices constitue essentiellement une surface équipotentielle.
